# EUROPEAN PATENT SPECIFICATION

(11) **EP 0 566 212 B1**
(45) Date of publication and mention of the grant of the patent: **17.07.1996**
(21) Application number: 93201111.7
(22) Date of filing: 15.04.1993
(51) Int. Cl.: B23K 9/12, B23K 9/028, B23K 5/08

(54) **Welding device**
Schweissvorrichtung
Dispositif de soudage

(30) Priority: 16.04.1992 NL 9200706
(43) Date of publication of application: 20.10.1993
(73) Proprietor: Koninklijke Schelde Groep B.V., NL-4381 SE Vlissingen (NL)
(72) Inventor: van der Goes, Jacobus Johannes, NL-4386 AS Vlissingen (NL)
(74) Representative: de Bruijn, Leendert C.

(56) References cited:
- DD-A- 231 117
- US-A- 4 559 430
- US-A- 4 883 938
- DATABASE WPI Section Ch, Week 7735, Derwent Publications Ltd., London, GB; Class M, AN 77-62277 & JP-B-52 030 255 (MITSUBISHI ELECTRIC CORP.) 6 August 1977

## Description

The invention relates to a welding device comprising a welding head, drive means for varying the position of the welding head with respect to an object to be welded, gravitational direction detecting means to supply gravitational direction information to control means before the actual welding process is carried out and from a position of standstill, said control means being connected to the drive means in order to control said position of the welding head relative to said gravitational direction.

Such a welding device is known from US-A-4.883.938. Said known device relates to automatic welding by means of a welding robot. A gravitational direction detector is mounted to the robot body, the body being fixed to a wall, a ceiling, etc. A welding head for welding an object is controlled by a control unit. Before the actual welding is carried out, the direction of gravity is supplied to the control unit by the gravitational direction detector as one of the parameters for controlling the position of the welding head relative to the object during welding. The direction of gravity serves as a well defined reference direction in determining the position and direction of the welding head. However, as the gravitational direction detector is mounted to the fixed robot body, in fact only the position of the robot body relative to the direction of gravity can be measured directly. The position of the welding head being connected to the robot body by many arms, rotating means, and the like, can only be determined in an indirect way. Since the stiffness of robot arms is restricted and there is always a backlash in the rotating means, the accuracy of determining the position of the welding head relative to the direction of gravity will be limited by the known means. Distortions in the robot arms, e.g. due to aging, may well lead to errors in determining the position of the welding head.

Another welding device is known from East German Patent Specification DD-231,117.

In this known welding device the gravity-dependent element which determines the (angular) position of the welding head relative to the gravity vector is formed by a pendulum. The pin of said pendulum is coupled to the relative position indicator, an angle-dependent pulse generator, while the housing of the pendulum is connected to the welding head. This means that the relative position indicator always provides the angular displacement relative to an initial angle. This initial angle is determined by an initial position indicator, which in the known device is formed by a switch.

In order to prevent oscillations of the pendulum when there are changes in speed, in the device of DD-231,117 the pendulum is placed in an oil bath. However, such a pendulum has the disadvantage that during continuous rotation of the welding head the friction of the oil will cause it to lag slightly behind on movement, and it will consequently not be completely vertical, with the result that the pulse generator connected to the pendulum will deliver an incorrect angle value. Since the degree of lagging behind on movement depends on the speed of rotation of the pendulum, the position indicator will be subject to a speed-dependent measuring error. Partly due to its mass inertia, the pendulum will also fail to assume the correct vertical position immediately when there are speed changes. Indeed, the damping by the oil bath does prevent oscillations up to a certain level, but it also delays the reaction time of the pendulum. When there are very abrupt changes in speed, oscillations of the pendulum, and therefore considerable errors in angle determination cannot, however, be ruled out. This makes such a position indicator unsuitable for accurately determining the continuous or stepwise varying (angular) position of a welding head. A measuring error is also possible when determining a (vertical) initial position if the switch used as the initial position indicator is operated before the pendulum has come to a standstill.

The object of the invention is to eliminate the disadvantages of the known devices. To this end, the welding device according to Claim 1 is proposed.

The device according to the invention is preferably designed in such a way that the control device is provided with means for setting a predetermined initial position. Such means can comprise a feedback or servo system, in which case the welding head is moved over a certain distance, after standstill the absolute initial position is determined, and in a number of steps, in which the initial position indicator always comes to a standstill, the difference between the absolute initial position and the desired initial position is eliminated. The initial position indicator is therefore preferably equipped for providing an absolute initial position.

The device according to the invention is also preferably designed in such a way that the initial position indicator comprises a fluid-damped pendulum. The housing of such a pendulum is in this case coupled to the welding head, while the pendulum itself is coupled to a pulse generator. It is, however, also possible to use a pendulum which is damped in another way or, for example, a position indicator in which a mercury droplet or a metal ball makes the connection between various sets of contacts depending on its position. Such an initial position indicator preferably has two degrees of freedom or measuring directions, so that angular positions in two planes at right angles to each other can be determined. This is advantageous in the case of welding devices which are not set up level, or in which the head moves in more than one plane, so that deviations relative to a first vertical plane can be compensated for by the control device.

A preferred embodiment of the welding device according to the invention is equipped for electric welding. More particularly, the welding device is suitable for electric gas arc welding, such as TIG welding. An electric welding device according to the invention is preferably designed in such a way that it is equipped for regulating the current intensity, the speed of the welding head, the material supply speed, and/or the length of the welding arc, i.e. the distance between the electrode and the weld pool surface depending on the absolute position of the welding head.

It is also possible to design the welding device according to the invention in such a way that it is equipped for gas welding. Such a welding device according to the invention is designed in such a way that it is equipped for regulating the gas supply, the speed of the welding head, the material supply speed and/or the flame length, i.e. the distance between the torch and the weld pool surface, depending on the absolute angular position of the welding head.

The welding device according to the invention is preferably provided with display means for displaying the angular position of the welding head. This makes it possible to control the welding process accurately, while the control is independent of time.

Although the welding head of the welding device according to the invention can describe different sorts of movements, a preferred embodiment is designed in such a way that the welding head is equipped for carrying out an orbital movement around a circular object, the welding device also comprising relative angular position detecting means for supplying the control unit with information regarding the relative angular position of the welding head. This is advantageous in particular during the welding of pipes, in the case of which a weld has to be made along the periphery of the pipe. Such a welding device is also suitable for fixing pipes and plates to each other. In this case the welding device can also be designed in such a way that it is provided with means for clamping pipes.

The invention will be explained in greater detail below with reference to the Figures.

Figure 1 shows diagrammatically the orbital welding of a pipe in different welding positions.

Figure 2 shows, partly diagrammatically, the welding device according to the invention.

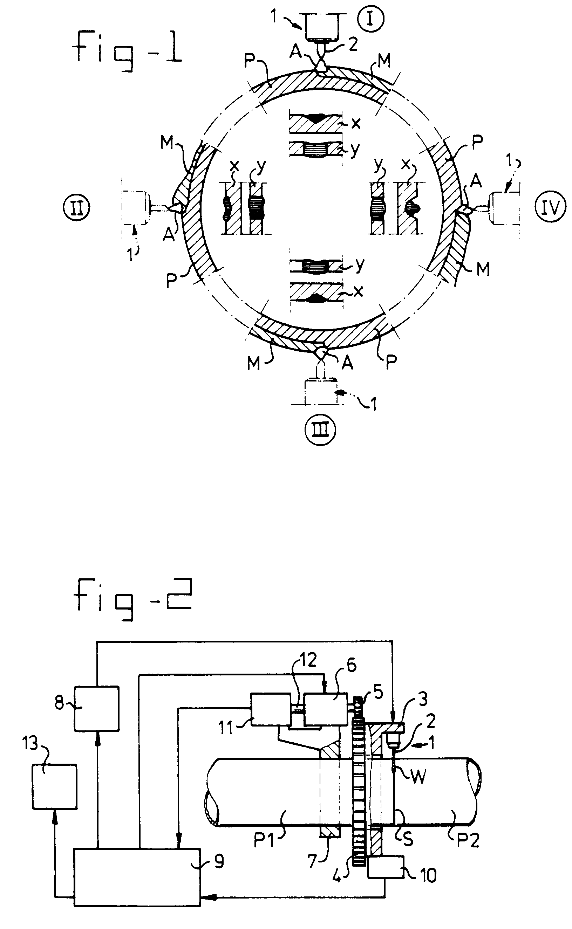

A welding head 1 is shown in different angular positions in Figure 1. X indicates, always diagrammatically, the situation in which the welding process is taking place on the outside of a pipe, while Y indicates the situation in which penetration welding is being carried out.

In position I the welding head 1 is vertical, above the pipe segment P shown diagrammatically and in cross-section. The welding head 1 shown in this example is provided with an electrode 2, which generates a welding arc A between the electrode 2 and the pipe P during operation. This produces a mass of initially molten material M, which solidifies after some time. In position I, situation X, gravity has virtually no (adverse) effect on the molten material M, since the latter is on top of the pipe P. In situation Y, on the other hand (penetration welding), the weld pool is no longer supported by solid material, with the result that the weld pool runs into the pipe P. In Figure 1 the welding head 1 moves rotating anticlockwise round the pipe P, so that a quantity of material M is always present at one side of the electrode 2, on the right-hand side in position I.

In position II, situation X, the welding head 1 is horizontal, at the left-hand side of the pipe P. Here again, a welding arc A and a quantity of molten material M are produced. However, under the influence of gravity, this molten material M will move downwards, i.e. in the direction of the welding arc A in the case shown. This results in an uneven distribution of the material M, and consequently an uneven thickness and strength of the welded joint produced. In situation Y the mass of the weld pool is greater, with the result that this effect is reinforced.

In position III, situation X, the welding head 1 is again vertical, but this time below the pipe P. Although the material M in this position also will move under the influence of gravity in the direction of the welding arc A, this effect in this position will be fairly slight. In position III, situation Y, the effect is much greater, due to the greater weld pool mass, and the weld pool will run away outside.

In position IV the welding head 1 is horizontal again, at the side of the pipe P. In this position, situation X, the material M will move from there under the influence of the gravity of the welding arc A. In this position also, an undesirable deformation of the welded joint produced occurs. In situation Y, this effect is much more clearly present again.

It is of great importance to eliminate the adverse effect of gravity on the welded joint as much as possible by controlling the parameters of the welding process depending on the position of the welding head 1. For example, in the case of an electric welding device, the magnitude of the welding current and the speed of revolution of the welding head will determine how much liquid material M is present at a certain point. Therefore, in positions II and IV the welding device will be set in such a way that at a given moment as little molten material M as possible is present, in order to minimise the "sagging" of said material. In the positions I and III, on the other hand, more molten material M can be present at a given moment, because in this position the adverse effect of gravity is much less.

For controlling the welding parameters depending on the variable angular position of the welding head, it is important to be able to determine said angular position accurately. Speed changes of the welding head in this case must not have any influence on the accuracy of the position determination.

Figure 2 shows, partly diagrammatically, a welding device which according to the invention is provided with angle-determining means which are independent of speed and acceleration. The welding device comprises a welding head 1 with an electrode 2. Said electrode 2 is fixed to a rotary support part 3, which is provided with a gear wheel 4. A pinion 5, which is connected to a motor 6, meshes with the gear wheel 4. The motor 6 is fitted on a fixed support part 7, which is preferably provided with means (not shown) for clamping a pipe part P1. The pipe part P2 is also fitted, with supporting means not shown, against the pipe part P1. The seam S, which is present between the pipe parts P1 and P2, is welded up with the aid of the welding head 1, which is positioned opposite said seam, after which a trail of solidified material W occurs. By means of the motor 6, the welding head 1 can be moved around the pipe parts, in order to weld up the entire weld seam S.

The welding current for the electrode 2 is provided by a diagrammatically shown welding machine 8. Both the welding machine 8 and the motor 6 are controlled by a control unit 9, which is connected to an inclinometer 10 and a tachogenerator 11. The inclinometer 10, which is fixed on the rotary support part 3, in this case acts as an absolute initial position indicator. The tachogenerator 11, which is connected by means of the motor shaft 12 to the motor 6, in this case acts as a relative position indicator. The inclinometer 10 can be a commercially available inclinometer, such as model PMP-S1OM of Midori Precisions Corporation Ltd., but it can also be formed by another absolute (angular) position indicator which reacts to gravity. The angle recorder 11, which is preferably an angle-dependent pulse generator, can be a commercially available tachogenerator or optical angle recorder.

The control unit 9 is designed in such a way that it controls the welding machine 8 and the motor 6 depending on the output signals from the inclinometer 10 and the tachogenerator 11. For the making of a weld or a part of a weld, the initial position of the welding head 1 is determined by means of the inclinometer 10. In order to eliminate the influence of movements and accelerations on the angle determination, this positioning is carried out by a servo system controlled by the inclinometer 10, with the result that the welding head 1 ultimately comes to a standstill in a predefined absolute position. So, said position may be any position. Furthermore, it is possible to program the control unit 9 in such a way that, for instance, when the operator observes a poor welding process, an additional absolute position measurement may be carried out during the welding process. Of course, then the welding process will have to be stopped to give qualitatively good results, since detecting the direction of gravity from a position of standstill gives the best results, as explained above. After such an interruption the welding process will be restarted. No account need be taken any longer of the damping time of the inclinometer. This initial (angular) position is stored in the control unit 9, for example in a memory circuit. The control unit 9 sets the welding parameters on the basis of this initial (angular) position. For setting the welding parameters, the control unit 9 is preferably provided with a microprocessor with associated memory, in which a control program is stored. This program is preferably designed in such a way that a complete control of the welding device as a function of the absolute welding position is provided, in the case of which compensation can be made for the influence of gravity on the welding process. During the rotation of the welding head 1, the relative angular displacement relative to the initial position is determined by means of the tachogenerator 11. Since speed changes do not affect the accuracy with which the relative angular displacement is determined, the control unit 9 can accurately establish the angle of the welding head 1 relative to the gravity vector at any time.

Connected to the control unit 9 is a display unit 12, which is provided with, for example, a screen for displaying the angular position of the welding head 1 and the welding parameters set by the control unit 9. The welding device according to the invention makes possible programming and a display of the welding process on the basis of the angle covered or the current angle. This control and monitoring on the basis of angle instead of on the basis of time has the advantage that the results are independent of the speed of rotation of the welding head or of the diameter of the pipe parts P1 and P2. In other words, the same program of the control unit 9 can be used in principle for pipes of differing diameters. This means that reprogramming of the control unit 9 for different workpieces becomes unnecessary.

The invention is illustrated with reference to an electric welding device for welding pipes. However, the invention can also advantageously be used in electric or non-electric welding devices for welding plates to pipes, or for other welding devices in which the welding head assumes a variable angular position. This could be a welding head which is fixed to a robot arm and therefore carries out a movement of two or more degrees of freedom. Instead of electric welding, such as TIG welding, in which the control unit 9 controls, for example, the speed of rotation, the welding current, the ratio between the basic current and the peak current, and the desired arc length, a device for gas welding can also be used, in which, for example the gas current is regulated by the control unit 9. A welding device in which according to the invention the angular position of the welding head can be measured accurately relative to the gravity vector will always be obtained, as a result of which there can be compensation for the influence of the gravity vector on the welding process.

Although the invention is described above with reference to a welding device, it is not limited thereto. The inventive idea can be used in various devices in which the parameters of a process depend on the position relative to the gravity vector. Examples are spraying devices, for example for paint spraying or the application of coatings, in which the spraying process is controlled on the basis of the position of the spraying head. Control or measuring devices with a measuring head or probe can also advantageously be designed in such a way according to the invention that the relative position indicator is coupled to the drive means, that the initial position indicator comprises the gravity-dependent element, and that the control unit is equipped for determining an initial position while the welding head is at a standstill.

## Claims

1. Welding device comprising a welding head (1), drive means (4, 5, 6) comprising a motor (6) for varying the position of the welding head (1) with respect to an object to be welded, gravitational direction detecting means (10) being fixed substantially directly to the welding head (1) and arranged to supply gravitational direction information to control means (9) before the actual welding process is carried out and from a position of standstill, said control means (9) being connected to the drive means in order to control said position of the welding head (1) relative to said gravitational direction characterized in that the welding device furthermore comprises a separate relative position indicator (11) coupled to the motor shaft (12) and arranged for supplying information regarding angular displacement of said shaft and thus regarding the position of the welding head (1) relative to said position of standstill.

2. Welding device according to Claim 1 characterized in that the relative position indicator comprises an angle-dependent pulse generator (11).

3. Welding device according to Claim 1 or 2, characterized in that the control device is provided with means for setting a predetermined initial position.

4. Welding device according to Claim 1, 2 or 3, characterized in that the gravity-dependent element for supplying initial position information in a position of standstill only comprises a fluid-damped pendulum.

5. Welding device according to any of the Claims 1 to 4, characterized in that the gravity-dependent element has two degrees of freedom.

6. Welding device according to one of the preceding claims, characterized in that it is equipped for electric welding.

7. Welding device according to Claim 5, characterized in that it is equipped for TIG welding.

8. Welding device according to Claim 6 or 7, characterized in that it is equipped for regulating the current intensity, the speed of the welding head, the material supply speed, and/or the length of the welding arc depending on the absolute position of the welding head.

9. Welding device according to any of the Claims 1 to 5, characterized in that it is equipped for gas welding.

10. Welding device according to Claim 9, characterized in that it is equipped for regulating the gas supply, the speed of the welding head, the material supply speed and/or the flame length depending on the absolute position of the welding head.

11. Welding device according to one of the preceding claims, characterized in that it is provided with display means for displaying the position of the welding head.

12. Welding device according to any of the preceding claims characterized in that the welding head (1) is equipped for carrying out an orbital movement around a circular object (P1, P2).

13. Welding device according to Claim 11, characterized in that it is provided with means for clamping pipes.

## Patentansprüche

1. Schweißvorrichtung, die umfaßt einen Schweißkopf (1), Antriebsmittel (4, 5, 6), die einen Motor (6) zum Verändern der Position des Schweißkopfes (1) mit Bezug auf ein zu schweißendes Objekt umfassen, Schwerkraftrichtungs-Erfassungsmittel (10), das im wesentlichen direkt an dem Schweißkopf (1) befestigt und zum Zuführen von Schwerkraftrichtungs-Information zu dem Steuermittel (9) vor dem Ausführen des aktuellen Schweißvorganges und von einer Stillstandsposition aus ausgelegt ist, welches Steuermittel (9) mit dem Antriebsmittel verbunden ist, um die Position des Schweißkopfes (1) relativ zur Schwerkraftrichtung zu steuern, **dadurch gekennzeichnet**, daß die Schweißvorrichtung weiter umfaßt eine mit der Motorwelle (12) gekoppelte separate Relativpositions-Anzeige (11), die ausgelegt ist zum Zuliefern von Information, welche die Winkelversetzung der Motorwelle und damit die Position des Schweißkopfes (1) relativ zur Stillstandsposition betreffende Information betrifft.

2. Schweißvorrichtung nach Anspruch 1, **dadurch gekennzeichnet**, daß die Relativpositions-Anzeige einen winkelabhängigen Impulsgenerator (11) umfaßt.

3. Schweißvorrichtung nach Anspruch 1 oder 2, **dadurch gekennzeichnet**, daß die Steuervorrichtung mit Mitteln zum Einstellen einer vorgegebenen Anfangsposition versehen ist.

4. Schweißvorrichtung nach Anspruch 1, 2 oder 3, **dadurch gekennzeichnet**, daß das schwerkraftabhängige Element zum Zuleiten von Anfangspositions-Information nur in einer Stillstandsposition ein fluidgedämpftes Pendel umfaßt.

5. Schweißvorrichtung nach einem der Ansprüche 1 bis 4, **dadurch gekennzeichnet**, daß das schwerkraftabhängige Element zwei Freiheitsgrade besitzt.

6. Schweißvorrichtung nach einem der vorangehenden Ansprüche, **dadurch gekennzeichnet**, daß sie für Elektroschweißung ausgerüstet ist.

7. Schweißvorrichtung nach Anspruch 5, **dadurch gekennzeichnet**, daß sie für WIG-Schweißen (Wolfram-Inertgas-Schweißen) ausgelegt ist.

8. Schweißvorrichtung nach Anspruch 6 oder 7, **dadurch gekennzeichnet**, daß sie zum Regeln der Stromintensität, der Schweißkopf-Geschwindigkeit, der Materialzufuhr-Geschwindigkeit und/oder der Länge des Schweißbogens in Abhängigkeit von der Absolutposition des Schweißkopfes ausgelegt ist.

9. Schweißvorrichtung nach einem der Ansprüche 1 bis 5, **dadurch gekennzeichnet**, daß sie für Gasschweißen ausgerüstet ist.

10. Schweißvorrichtung nach Anspruch 9, **dadurch gekennzeichnet**, daß sie zum Regulieren der Gaszufuhr, der Schweißkopf-Geschwindigkeit, der Materialzufuhr-Geschwindigkeit und/oder der Flammenlange in Abhängigkeit von der Absolutposition des Schweißkopfes ausgelegt ist.

11. Schweißvorrichtung nach einem der vorangehenden Ansprüche, **dadurch gekennzeichnet**, daß sie mit Anzeigemittel zum Anzeigen der Position des Schweißkopfes versehen ist.

12. Schweißvorrichtung nach einem der vorangehenden Ansprüche, **dadurch gekennzeichnet**, daß der Schweißkopf (1) zum Ausführen einer Umlaufbewegung um ein kreisförmiges Objekt (P1, P2) ausgelegt ist.

13. Schweißvorrichtung nach Anspruch 11, **dadurch gekennzeichnet**, daß sie mit Mitteln zum Klemmen von oder an Rohren versehen ist.

## Revendications

1. Dispositif de soudage comprenant une tête de soudage (1), un moyen d'entraînement (4, 5, 6) comportant un moteur pour modifier la position de la tête de soudage (1) par rapport à un objet à souder, un moyen de détection (10) de direction de la pesanteur étant fixé sensiblement directement à la tête de soudage (1) et conçu pour fournir des informations de direction de la pesanteur à un moyen de commande (9) avant que l'opération de soudage proprement dite ne soit effectuée et à partir d'une position d'arrêt, ledit moyen de commande (9) étant relié au moyen d'entraînement afin de commander ladite position de la tête de soudage (1) par rapport à ladite direction de la pesanteur, caractérisé en ce que le dispositif de soudage comprend en outre un indicateur séparé (11) de position relative couplé à l'arbre (12) du moteur et conçu pour fournir des informations sur l'écart angulaire dudit arbre et donc sur la position de la tête de soudage (1) par rapport à ladite position d'arrêt.

2. Dispositif de soudage selon la revendication 1, caractérisé en ce que l'indicateur de position relative comporte un générateur (11) d'impulsions dépendant d'une valeur d'angle.

3. Dispositif de soudage selon la revendication 1 ou 2, caractérisé en ce que le dispositif de commande est pourvu d'un moyen pour établir une position initiale prédéterminée:

4. Dispositif de soudage selon la revend cation 1, 2 ou 3, caractérisé en ce que l'élément dépendant de la pesanteur pour fournir des informations de position initiale en position d'arrêt de comporte qu'un pendule à amortissement par fluide.

5. Dispositif de soudage selon l'une quelconque des revendications 1 à 4, caractérisé en ce que l'élément de la pesanteur a deux degrés de liberté.

6. Dispositif de soudage selon l'une quelconque des revendications précédentes, caractérisé en ce qu'il est équipé pour le soudage électrique.

7. Dispositif de soudage selon la revendication 5, caractérisé en ce qu'il est éqqipé pour le soudage TIG.

8. Dispositif de soudage selon la revendication 6 ou 7, caractérisé en ce qu'il est équipé pour réguler l'intensité du courant, la vitesse de la tête de soudage, le vitesse d'alimentation en matière et/ou la longueur de l'arc de soudage en fonction de la position absolue de la tête de soudage.

9. Dispositif de soudage selon l'une quelconque des revendications 1 à 5, caractérisé en ce qu'il est équipé pour te soudage autogène.

10. Dispositif de soudage selon la revendication 9, caractérisé en ce qu'il est équipé pour réguler l'alimentation en gaz, la vitesse de la tête de soudage, la vitesse d'alimentation en matière et/ou la longueur de flamme en fonction de la position absolue de la tête de soudage.

11. Dispositif de soudage selon l'une quelconque des revendications précédentes, caractérisé en ce qu'il est pourvu d'un moyen d'affichage pour afficher la position de la tête de soudage.

12. Dispositif de soudage selon l'une quelconque des revendications précédentes, caractérisé en ce que la tête de soudage (1) est équipée pour tourner autour d'un objet circulaire (P1, P2).

13. Dispositif de soudage selon la revendication 11, caractérisé en ce qu'il est pourvu d'un moyen pour serrer des tuyaux.
